# FASCICULE DE BREVET EUROPEEN

(11) **EP 3 231 068 B1**
(45) Date de publication et mention de la délivrance du brevet: **28.04.2021**
(21) Numéro de dépôt: 15801742.6
(22) Date de dépôt: 24.11.2015
(51) Int. Cl.: H02K 7/116

(54) **ACTIONNEUR A ENCOMBREMENT REDUIT, AVEC BLOCAGE INTEGRE DU MOTEUR PAR RAPPORT AU BOITIER**
AKTUATOR MIT VERRINGERTEN ABMESSUNGEN UND INTEGRIERTER VERRIEGELUNG DES MOTORS IN BEZUG AUF DAS GEHÄUSE
ACTUATOR HAVING REDUCED DIMENSIONS AND INTEGRATED LOCKING OF THE MOTOR WITH RESPECT TO THE HOUSING

(30) Priorité: 11.12.2014 FR 1462250
(43) Date de publication de la demande: 18.10.2017
(73) Titulaire: Valeo Systemes Thermiques, 78320 Le Mesnil Saint Denis (FR)
(72) Inventeur: DION, Nathalie, 78322 Le Mesnil Saint-Denis cédex (FR); KERG, Philippe, 78322 Le Mesnil Saint-Denis cédex (FR); COLINET, Sébastien, 78322 Le Mesnil Saint-Denis cédex (FR); LE GOFF, Morgan, 78322 Le Mesnil Saint-Denis cédex (FR)
(74) Mandataire: Tran, Chi-Hai
(86) Numéro de dépôt international: PCT/EP2015/077458
(87) Numéro de publication internationale: WO 2016/091580

(56) Documents cités:
- WO-A1-2013/120704
- DE-A1-102008 030 006
- JP-A- 2007 159 237
- JP-Y1- S4 030 893
- US-B1- 6 437 470

## Description

### DOMAINE DE L'INVENTION

La présente invention concerne le domaine de l'aéraulique et plus particulièrement le domaine des actionneurs d'organes mobiles, en particulier pour véhicule, tel que par exemple des volets de distribution d'air dans les circuits de chauffage, de ventilation et d'air conditionné. De tels circuits sont notamment présents dans les installations de conditionnement d'air des véhicules.

### ARRIERE PLAN DE L'INVENTION

Une grande partie des véhicules est désormais équipée de dispositifs de conditionnement d'air et ce quel que soit le type de motorisation du véhicule. Classiquement, un tel dispositif comprend un groupe de génération de froid, entraîné par le moteur du véhicule ou par un moteur électrique dédié, ainsi que des éléments de récupération de la chaleur du moteur du véhicule (dans le cas d'un moteur à combustion interne) ou des éléments chauffants, généralement électriques. Un flux d'air prélevé dans l'habitacle ou à l'extérieur du véhicule est dirigé à travers un échangeur de chaleur permettant d'ajouter ou soustraire des calories à ce flux. Le flux d'air ainsi réchauffé ou refroidi est ensuite conduit vers différents points de soufflage du véhicule à travers un réseau de conduits de distribution d'air. Afin de pouvoir diriger le flux d'air, réaliser des mélanges d'airs chaud et froid, basculer depuis un circuit de chauffage vers un circuit de refroidissement ou encore réguler le débit du flux d'air en chacun des points de soufflage, des volets aérauliques sont placés en divers points du réseau de conduits de distribution d'air. La position de ces volets aérauliques est généralement commandée à l'aide d'actionneurs électromécaniques.

Usuellement, un tel actionneur comprend un moteur électrique dont l'arbre moteur est pourvu d'une vis sans fin. Cette vis sans fin engrène avec la première roue dentée d'un train d'engrenages transmettant, à un rapport de réduction près, la rotation de l'arbre moteur à un composant de sortie de l'actionneur. Le composant de sortie, généralement une roue dentée, un arbre cannelé ou tout autre connecteur apte à transmettre une rotation, interagit avec un composant homologue solidaire d'un axe de rotation du volet aéraulique.

Un tel actionneur est conditionné dans un boîtier parallélépipédique résultant de l'assemblage de deux demi-boîtiers qui comprennent chacun des paliers guidant en rotation les axes des roues dentées du train d'engrenages. Le composant de sortie de l'actionneur vient en saillie d'une des faces du boîtier, selon une direction perpendiculaire à celle de l'arbre de sortie du moteur électrique. Le boîtier comprend également des moyens de blocage en rotation du moteur électrique, souvent réalisés à l'aide de surfaces planes venant en appui sur des méplats réalisés sur l'enveloppe du moteur. Ceci nécessite des usinages particuliers.

Un tel actionneur présente plusieurs inconvénients notamment en termes de coût de réalisation, d'encombrement et de facilité de montage.

En outre, le boîtier doit être pourvu de moyens de contrer sa rotation par rapport au support du volet, ce qui est généralement réalisé à l'aide de vis traversant le boîtier pour venir mordre dans la matière plastique du support de volet. Un exemple d'art antérieur est le document US6437470.

### OBJET DE L'INVENTION

Un but de l'invention est de réduire l'encombrement de l'actionneur et les coûts liés à sa fabrication et son montage.

### RESUME DE L'INVENTION

A cet effet, selon l'invention et la revendication 1, on prévoit un actionneur de positionnement d'un organe mobile, pour véhicule, comprenant un moteur électrique (30) logé dans une enveloppe de moteur fermée à l'une des extrémités par un couvercle, le moteur comprenant un arbre moteur qui traverse le couvercle, l'arbre moteur étant lié en rotation à un réducteur épicycloïdal ayant une couronne planétaire extérieure, le couvercle (35) comprenant des moyens de blocage bloquant la rotation dudit couvercle par rapport à l'enveloppe du moteur et bloquant la rotation de ladite couronne planétaire extérieure.

Ainsi, le blocage en rotation du réducteur par rapport au moteur est assuré par le couvercle qui fait partie intégrante de l'enveloppe du moteur, ce qui facilite l'assemblage de ces deux éléments lors de la fabrication de l'actionneur et en réduit les coûts. L'utilisation d'un réducteur épicycloïdal améliore la compacité de l'actionneur et en réduit lui aussi les coûts de fabrication.

Avantageusement, les moyens de blocage sont agencés pour bloquer également en rotation l'enveloppe du moteur par rapport au boîtier.

Cette disposition facilite l'assemblage des éléments de l'actionneur entre eux et réduit les temps et coûts de fabrication de l'actionneur.

Avantageusement encore, l'arbre moteur s'étendant selon un axe longitudinal, les moyens de blocage réalisent également un guidage en position du couvercle par rapport à l'enveloppe selon une direction longitudinale.

L'utilisation des mêmes moyens pour réaliser le blocage en rotation et le guidage en position du couvercle par rapport à l'enveloppe réduit également les temps et coûts de fabrication de l'actionneur.

Selon l'invention et la revendication 1, les moyens de blocage comprennent au moins un élément venant en saillie du couvercle selon une direction perpendiculaire à l'axe de l'arbre moteur.

Selon un autre mode de réalisation, le moteur électrique est un moteur pas à pas et les moyens de blocage comprennent également une référence d'indexation du moteur permettant d'indexer la rotation du moteur par rapport à un point de l'enveloppe.

Ceci permet de mettre à profit l'opération de calibrage du moteur lors de sa fabrication et évite d'avoir à réaliser une opération de calibrage final de l'actionneur.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés parmi lesquels :
- la figure 1 est une vue en perspective éclatée d'un mode de réalisation d'un actionneur selon l'invention ;
- la figure 2 est une vue en perspective du moteur de l'actionneur de la figure 1 dans laquelle le boîtier a été partiellement représenté ;
- la figure 3 est une vue en perspective en coupe partielle de l'ensemble moteur et réducteur de l'actionneur de la figure 1 ;
- la figure 4 est une vue en perspective de l'actionneur de la figure 1 ;
- la figure 5 est une vue de côté de l'actionneur de la figure 4 ;
- la figure 6 est une vue de dessus de l'actionneur de la figure 4 ;
- la figure 7 est une vue identique à celle de la figure 4 dans laquelle la partie supérieure du boîtier a été retirée ;
- les figures 8.1 à 8.4 sont des représentations en perspective des étapes d'assemblage de l'actionneur de la figure 1 ;

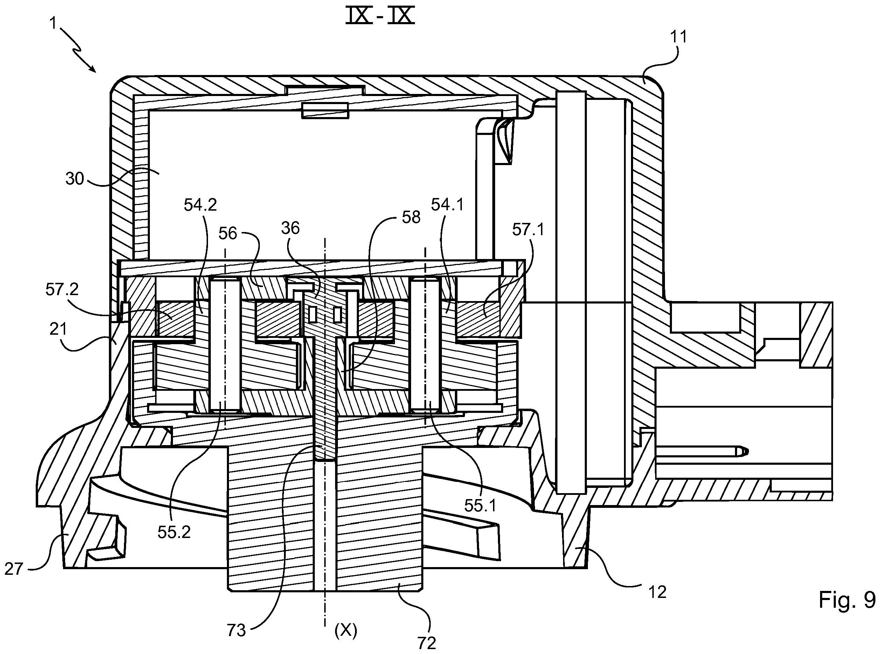

- la figure 9 est une vue en coupe de l'actionneur selon un plan IX-IX de la figure 4 ;
- la figure 10 est une vue en perspective d'un connecteur destiné à accueillir l'actionneur de la figure 1 ;
- les figures 11.1 à 11.5 sont des représentations en perspective des étapes de montage de l'actionneur de la figure 1 sur le connecteur de la figure 10.

### DESCRIPTION DETAILLEE DE L'INVENTION

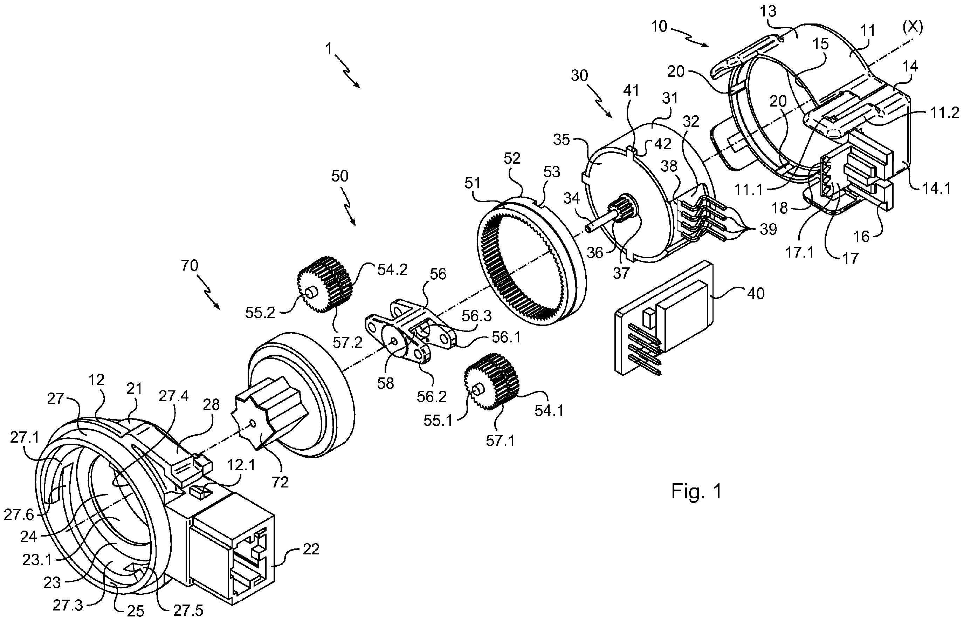

En référence aux figures 1 à 7, l'actionneur selon l'invention, généralement désigné 1, est monté dans un véhicule (non représenté) et comprend un boîtier 10 renfermant un moteur électrique 30, par exemple un moteur électrique pas à pas, lié à un réducteur épicycloïdal à deux étages 50 dont un composant de sortie 70 est lié en rotation à un organe mobile, par exemple un volet aéraulique (non représenté) de véhicule automobile.

Le boîtier 10 comprend un premier demi-boîtier 11 et un deuxième demi-boîtier 12 liés l'un à l'autre. Selon un mode de réalisation particulier, la liaison est réalisée par encliquetage de quatre ergots 12.1 du deuxième demi-boîtier 12 dans des fenêtres correspondantes 11.1 réalisées dans des languettes 11.2 en saillie du premier demi-boîtier 11. Toutefois, d'autres modes de liaison peuvent être utilisés. Le premier demi-boîtier 11 s'étend au moins partiellement autour du moteur 30 tandis que le deuxième demi-boîtier 12 comprend une ouverture 24 au travers de laquelle s'étend le composant de sortie 70.

Le moteur 30 est logé dans une enveloppe cylindrique 31. Selon un exemple de réalisation, cette enveloppe cylindrique 31 est solidaire du stator 32 du moteur 30. Le stator 32 est constitué, par exemple, d'une série de bobinages en cuivre entourant un rotor 33 dont est solidaire au moins un arbre moteur 34 du moteur 30.

L'arbre moteur 34 s'étend selon un axe longitudinal X de l'actionneur 1 en saillie d'un couvercle 35 s'étendant perpendiculairement à l'axe longitudinal X et fermant une extrémité de l'enveloppe 31. En d'autres termes, l'arbre moteur traverse le couvercle selon l'axe longitudinal X de l'actionneur 1.

Selon un mode de réalisation, une roue dentée 36 est solidaire de l'arbre moteur 34. Cette roue dentée 36 est située sur la portion de l'arbre de sortie 34 située à proximité du couvercle 35.

Selon un exemple particulier de réalisation, une rondelle 37 de matériau lubrifiant, tel que du téflon, est interposée entre la base de la roue dentée 36 et le couvercle 35, l'arbre moteur 34 s'étendant largement au-delà de la face de la roue dentée 36 opposée à celle en contact avec la rondelle 37.

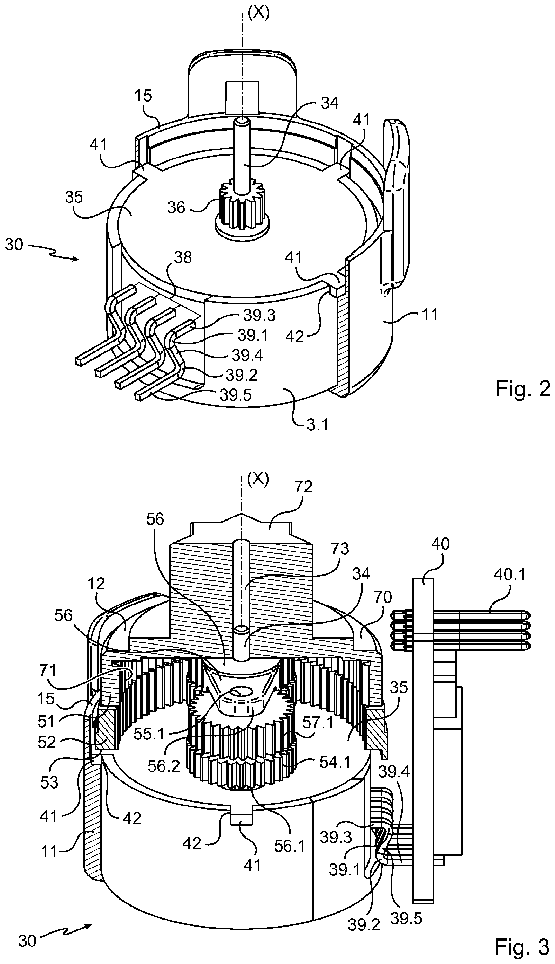

Comme visible en figure 2, le circuit électrique 38 du moteur électrique 30 est relié à au moins un conducteur. Selon un mode de réalisation particulier, le circuit électrique 38 est relié à au moins 2 conducteurs, de préférence quatre conducteurs, identiques 39 parallèles entre eux.

Ce ou ces conducteurs sont sensiblement en forme de « S » présentant chacun au moins un coude. Selon un mode de réalisation particulier, ce ou ces conducteurs présentent au moins deux coudes 39.1 et 39.2. Dans la suite de la description, un seul des conducteurs 39 sera décrit, les autres conducteurs étant identiques.

Dans le mode de réalisation particulier dans lequel le conducteur présente deux coudes, le coude 39.1 relie un premier tronçon d'extrémité 39.3 du conducteur 39 lié au circuit électrique 38 à un tronçon intermédiaire 39.4 lui-même relié par le coude 39.2 au deuxième tronçon d'extrémité 39.5 du conducteur. Les premier et deuxième tronçons d'extrémité 39.3 et 39.5 sont parallèles entre eux et s'étendent perpendiculairement à l'axe X de rotation de l'arbre moteur 34 tout en étant non colinéaires.

Le deuxième tronçon d'extrémité 39.5 du conducteur 39 est raccordé à une première extrémité d'une carte électronique 40. Selon un exemple de réalisation, la carte électronique 40 s'étend dans un plan parallèle à l'axe X.

La deuxième extrémité de la carte 40 comprend au moins un conducteur 40.1.

Selon l'exemple de réalisation illustré en figure 3, la deuxième extrémité de la carte 40 comprend quatre conducteurs 40.1 s'étendant parallèlement aux tronçons 39.3 et 39.5.

Ce ou ces conducteurs 40.1 sont destinés à être reliés à un réseau de courant faible du véhicule 100. Ce ou ces conducteurs 40.1 sont réalisés à l'aide d'un fil d'acier. Selon un exemple de réalisation, ce fil d'acier présente une section carrée de largeur l'.

Au sens de la présente demande, le terme « coude » désigne un changement de direction d'un élément longiligne résultant d'un cintrage ou d'un pliage, le coude pouvant présenter un profil arrondi ou pointu.

Le conducteur 39 est réalisé par cintrage d'un fil métallique - par exemple un fil d'acier- dont la section carrée présente un côté de longueur l. Préférentiellement, la longueur minimale des tronçons 39.3, 39.4 et 39.5 est sensiblement égale à 2 mm. Les tronçons successifs 39.3 et 39.4 s'étendent selon des directions formant préférentiellement un angle de 70° entre elles. Les directions des tronçons successifs 39.4 et 39.5 forment elles également un angle de 70° entre elles.

On notera que les conducteurs électriques 39 sont suffisamment rigides pour que leur soudage soit aisément automatisable. Les coudes assurent une bonne compacité du conducteur, une flexibilité qui permet d'absorber les vibrations du moteur et de son environnement ainsi qu'une souplesse qui permet de s'adapter à des tolérances de fabrication et de montage plus larges, réduisant ainsi les coûts de fabrication. Les conducteurs 39 présentent de plus un coût plus faible que celui d'un conducteur souple. En outre, du fait des coudes 39.1, 39.2, les tronçons d'extrémité 39.1, 39.2 sont décalés l'un par rapport à l'autre. Il est dès lors possible de monter des composants électroniques sur l'une ou l'autre face de la portion de la carte électronique 40 à côté des tronçons d'extrémité 39.5 et en regard du coude 39.1 et du tronçon intermédiaire 39.3.

Comme visible sur les figures 1 à 3, le couvercle 35 est en forme de disque et s'étend dans un plan perpendiculaire à l'axe X. Toutefois, le couvercle peut être de forme différente. Le couvercle 35 comprend au moins une languette 41 en saillie radiale du disque.

Selon l'exemple illustré en Figure 2, le couvercle 35 comprend une pluralité de languette 41 en saillie radiale du disque et qui s'étendent selon des directions différentes, par exemple perpendiculaires entre elles.

Chaque languette 41 coopère avec une rainure homologue 42 de l'enveloppe 31. La ou les languettes 41 ont une longueur supérieure à l'épaisseur de l'enveloppe 31 et viennent donc en saillie de celle-ci, lorsque le couvercle 35 ferme l'enveloppe 31.

La couronne planétaire extérieure 51 du premier étage du train épicycloïdal 50 possède une face inférieure qui repose sur le couvercle 35. La couronne 51 comprend une jupe 52 en saillie axiale et qui entoure la portion supérieure de la surface extérieure de l'enveloppe 31. Cette jupe 52 comprend au moins une encoche 53 débouchante dans laquelle vient s'engager une portion de languette 41 en saillie de l'enveloppe 31.

Selon un exemple particulier de réalisation, la jupe 52 comprend une pluralité d'encoches 53 débouchantes dans lesquelles viennent s'engager les portions des languettes 41 en saillie de l'enveloppe 31.

Cet assemblage réalise un blocage en rotation de la couronne 51 par rapport à l'enveloppe 31. La longueur de la ou des languettes 41 est telle que celles-ci ont des portions en saillie radiale de la jupe 52.

Le premier étage du train planétaire 50 comprend un ou plusieurs satellites 54.1 et 54.2 engrenant d'une part avec la couronne 51 et d'autre part avec la roue dentée 36 qui agit en tant que planétaire intérieur. Les satellites 54.1 et 54.2 sont clavetés respectivement sur des arbres 55.1 et 55.2 qui s'étendent entre deux pattes parallèles 56.1 et 56.2 d'un porte-satellite 56. Un ou des satellites 57.1 et 57.2 du deuxième étage 57 du réducteur épicycloïdal 50 sont, eux également, clavetés respectivement sur les arbres 55.1 et 55.2. Ces satellites 57.1 et 57.2 comprennent chacun une dent de moins que les satellites 54.1 et 54.2 et engrènent avec une couronne dentée planétaire extérieure 71 solidaire du composant de sortie 70.

La patte 56.1 comprend une ouverture circulaire 56.3 en son centre au travers de laquelle s'étendent la roue dentée 36 et l'arbre moteur 34. Comme visible en figure 3, l'arbre moteur 34 du moteur 30 s'étend selon l'axe X à travers un cylindre central 58 solidaire de la patte 56.2. Cette liaison entre l'arbre moteur 34 et le porte-satellites 56 réalise alors le guidage en rotation du porte-satellites 56 autour de l'axe X.

Le composant de sortie 70 comprend une portion en saillie, par exemple sous la forme d'un arbre cannelé 72 d'axe X, destinée à coopérer avec un alésage cannelé 92 homologue du volet aéraulique 90. L'arbre cannelé 72 comprend un alésage 73 central d'axe X au travers duquel s'étend partiellement l'arbre moteur 34.

Le boîtier 10 va maintenant être décrit plus en détail en référence aux figures 1 à 7.

Selon un mode de réalisation, le demi-boîtier 11 comprend une portion cylindrique 13 ayant une extrémité fermée en saillie radiale de laquelle vient une portion parallélépipédique 14. Les portions 13 et 14 affleurent au niveau d'un plan 15 de jonction avec le demi-boîtier 12.

Le demi-boîtier 11 comprend une languette 16 s'étendant en saillie radiale d'une face 14.1 de la portion parallélépipédique 14. Une deuxième languette 17 située dans le même plan que la face 14.1 vient en saillie axiale du plan 15. Cette languette 17 comporte une extrémité distale 17.1 pourvue de d'une ou plusieurs dents triangulaires 18 au sommet desquelles est réalisé un méplat 19 de largeur sensiblement égale à la longueur l' d'un côté de la section des conducteurs 40.1. La face intérieure de la portion cylindrique 13 du demi-boîtier 11 comprend une ou plusieurs rainures 20 s'étendant parallèlement à l'axe X et formant ou une plusieurs ouvertures.

Selon un mode de réalisation particulier, la face intérieure de la portion cylindrique 13 du demi-boîtier 11 comprend trois rainures 20 situées à 90 degrés l'une de l'autre.

Cette ou ces rainures 20 débouchent au niveau du plan de jonction 15.

Le demi-boîtier 12 comprend une portion cylindrique 21 en saillie radiale de laquelle vient une portion parallélépipédique 22 tubulaire. Les portions 21 et 22 affleurent au niveau d'un plan 15' de jonction avec le demi-boîtier 11 et présentent une ouverture en cette extrémité.

Un disque 23 de diamètre supérieur à celui de la portion cylindrique 21 et pourvu d'un perçage central 24 destiné à laisser passer l'arbre cannelé 72 s'étend transversalement et vient fermer la première portion cylindrique 21. Le disque 23 comprend également une oreille 25 en saillie radiale du disque 23 et pourvue d'un perçage 26. Une paroi cylindrique 27 d'axe X s'étend en périphérie du disque 23 dans la région qui est délimitée par le plan du disque 23 qui est opposée à celle dans laquelle s'étend la portion cylindrique 21.

Une patte élastique 28 vient en saillie de la face extérieure de la paroi cylindrique 27 selon une direction sensiblement tangentielle de façon à créer un obstacle mécanique déformable formant butée de rotation. La face intérieure de la paroi 27 comprend un ou plusieurs filets hélicoïdaux 27.1, 27.2 et 27.3.

Selon un mode de réalisation particulier, la face intérieure de la paroi 27 comprend trois filets hélicoïdaux dont les portions en recouvrement délimitent des rainures 27.4, 27.5 et 27.6.

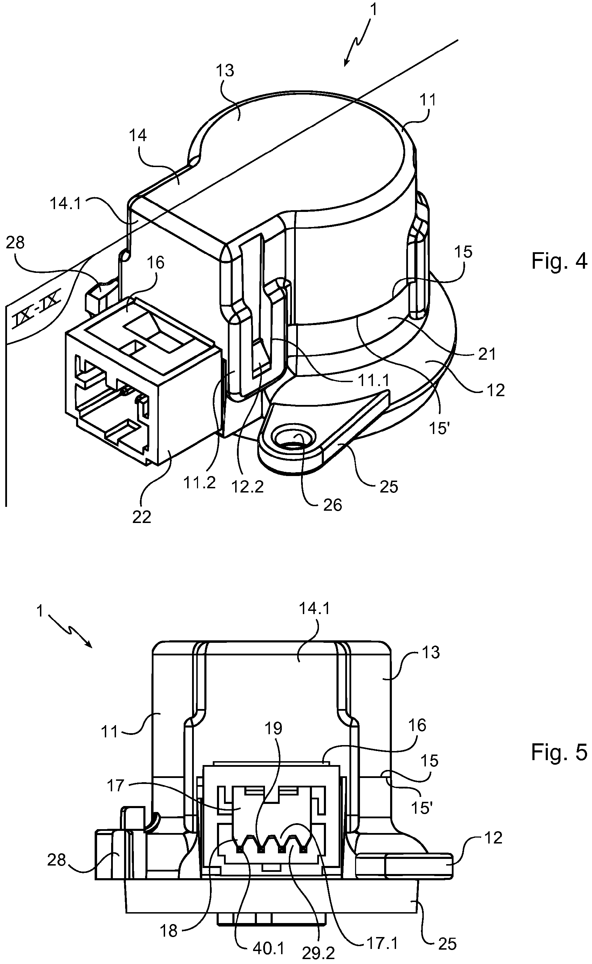

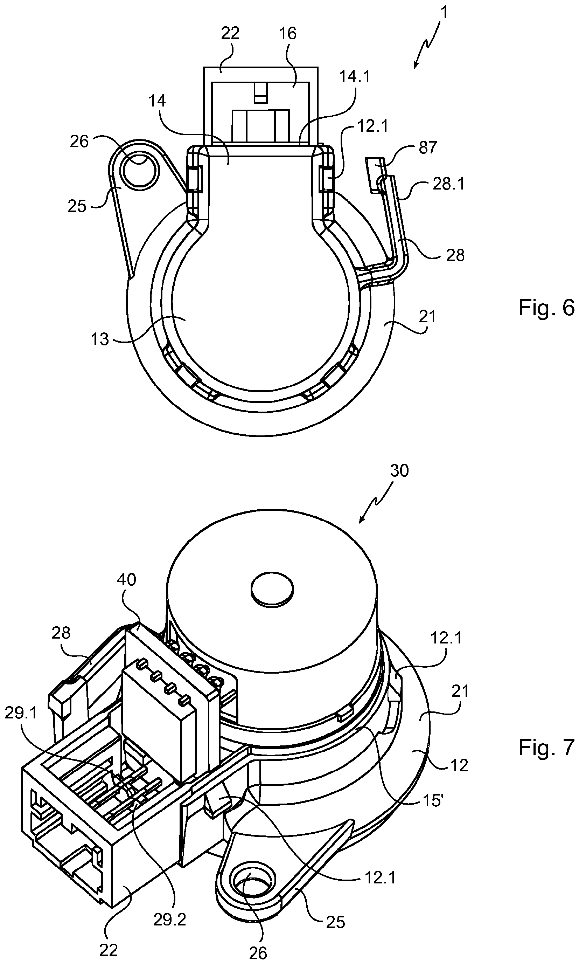

Enfin, comme visible sur les figures 5 et 7, le fond de la portion parallélépipédique 22 comprend un ou plusieurs créneaux carrés 29.1 de côté sensiblement égal à l.

Selon un mode de réalisation particulier, le fond de la portion parallélépipédique 22 comprend quatre créneaux carrés qui sont séparés par trois dents triangulaires 29.2.

La portion parallélépipédique 22 comporte également une face pourvue d'une découpe présentant une ou des rainures et une ou des portions en saillie. Cette découpe est destinée à accueillir et retenir un connecteur électrique spécifique.

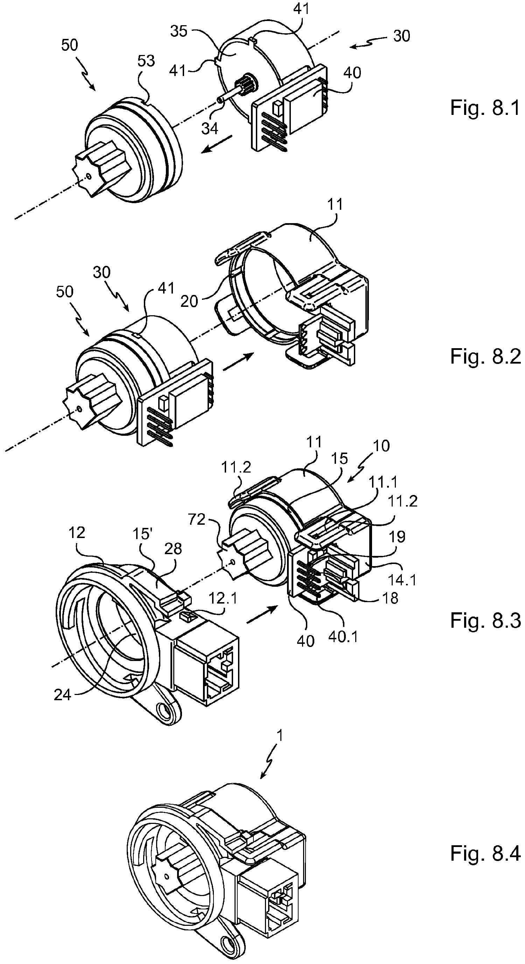

La fabrication de l'actionneur 1 est décrite en référence aux figures 8.1 à 8.4.

Lors de sa fabrication, le moteur 30 est indexé par rapport à l'une des languettes 41 du couvercle 35. La référence de rotation du moteur 30 est alors prise à partir de cette languette 41. Le ou les conducteurs 39 sont soudés à la carte 40.

Comme représenté en figure 8.1, le réducteur épicycloïdal 50 est présenté face à l'arbre moteur 34 et déplacé de manière à ce que l'arbre moteur 34 s'engage dans l'alésage central du cylindre 58 puis au travers de l'alésage 73 du composant de sortie 70. L'arbre moteur s'étendant au-delà de la roue dentée constituant le composant d'entrée s'engageant dans les alésages permet un guidage relatif du réducteur épicycloïdal 70 et du composant de sortie 70 par rapport au moteur 30 lors du montage et réduisent alors le temps de montage.

En outre, le guidage en rotation du porte-satellites par l'arbre de sortie du moteur permet avantageusement de réduire les difficultés et temps de montage du porte-satellites et en fiabilise le guidage, améliorant ainsi la fiabilité générale de l'actionneur.

La couronne 51 est ensuite tournée jusqu'à ce que la ou les rainures 53 fassent face à la ou aux languettes 41 puis le réducteur épicycloïdal 50 est déplacé selon une direction parallèle à l'axe X de manière à ce que la ou les languettes 41 soient engagées dans les rainures 53. Le réducteur épicycloïdal 50 se trouve alors bloqué en rotation par rapport au moteur 30.

L'ensemble constitué du moteur 30 et du réducteur épicycloïdal 50 est présenté face au demi-boîtier 11 de manière à ce que la ou les rainures 20 du demi-boîtier 11 fassent face aux languettes 41 du couvercle 35.

L'ensemble moteur 30 / réducteur épicycloïdal 50 est alors déplacé selon une direction parallèle à l'axe X de manière à ce que la ou les languettes 41 soient engagées dans les rainures 20 (figure 8.2).

L'engagement de la ou des languettes 41 dans les rainures 20 réalise le blocage en rotation de l'ensemble moteur 30 / réducteur épicycloïdal 50 par rapport au demi-boîtier 11.

Dans cette position, le ou les conducteurs 40.1 reposent sur le ou les méplats 19 des dents triangulaires 18 (figure 8.3) et la périphérie de la carte électronique 40 est reçue dans la ou les rainures réalisées dans les parois de la portion parallélépipédique 14.1 du demi-boîtier 11.

Le demi-boîtier 12 est ensuite présenté de manière à ce que l'arbre cannelé 72 fasse face au perçage 24 et que les fenêtres 11.1 des languettes 11.2 soient alignées avec les ergots 12.1. Une translation selon l'axe X du demi-boîtier 12 relativement à l'ensemble demi-boîtier 11 / moteur 30 / réducteur épicycloïdal amène alors les plans de jonction 15 et 15' respectifs des demi-boîtiers 11 et 12 en contact.

Selon un mode de réalisation particulier, des ergots 12.1 viennent s'encliqueter dans les fenêtres 11.1 des languettes 11.2 et achèvent l'assemblage de l'actionneur 1.

Lorsque les demi-boîtiers 11 et 12 sont assemblés, le ou les conducteurs 40.1 sont reçus dans les créneaux 29.1 et pincés entre le fond de ceux-ci et les méplats 19 des dents 18 (figure 5). Ceci assure un maintien en position efficace du ou des conducteurs 40.1 et réduit les sollicitations mécaniques sur les soudures reliant les conducteurs 40.1 à la carte électronique 40. Le positionnement relatif du ou des conducteurs 40.1 est garanti, ce qui permet d'éviter d'avoir recours à des embouts surmoulés.

Au cours du montage des éléments de l'actionneur 1, la référence d'indexation du moteur est maintenue. En effet, elle correspond à une des languettes 41 dont la position par rapport au boîtier 10 est déterminée. Il n'est alors pas nécessaire de réaliser une nouvelle opération de calibrage du moteur 30, ce qui représente un avantage notable sur les actionneurs de l'art antérieur.

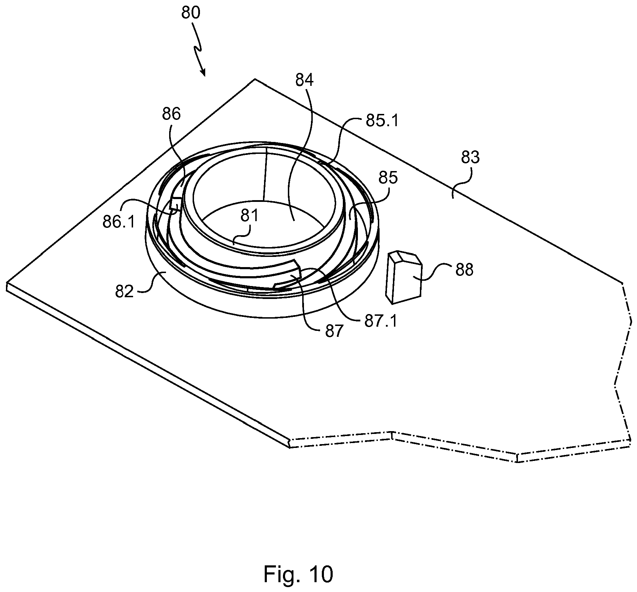

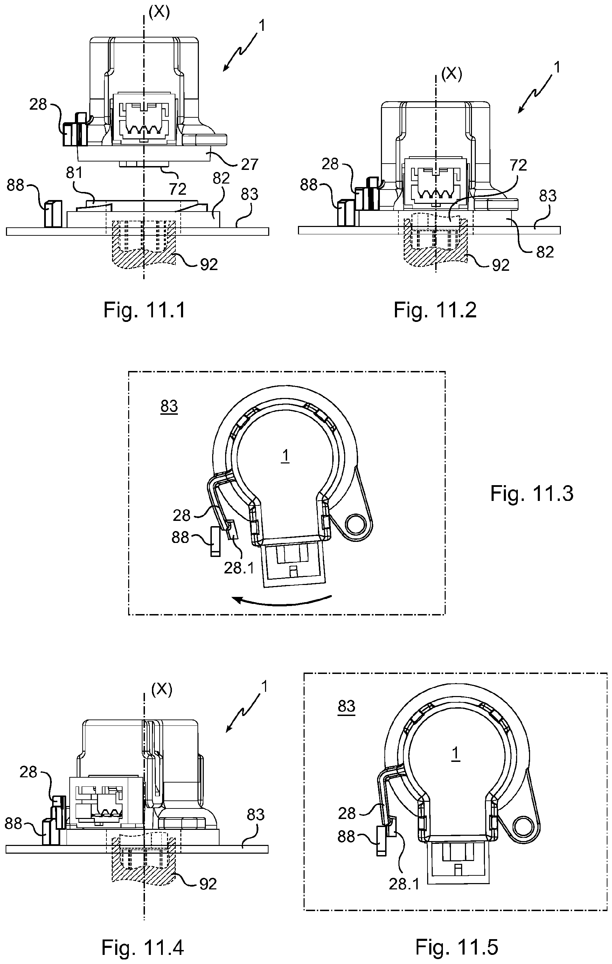

La figure 10 représente un connecteur 80 destiné à raccorder l'actionneur 1 à un dispositif, par exemple un volet aéraulique (non représenté) d'une installation aéraulique. Ce connecteur 80 comprend deux parois cylindriques coaxiales 81 et 82 venant en saillie perpendiculairement à une portion plane de la face extérieure d'un capot 83 du circuit aéraulique. La paroi 81 borde un perçage 84 derrière lequel se trouve un alésage cannelé 92 (représenté en trait pointillé notamment sur la figure 11.1) solidaire en rotation de l'axe de rotation du volet aéraulique. La paroi 82 s'étend autour de la paroi 81. Un ou plusieurs filets hélicoïdaux 85, 86 et 87 viennent en saillie radiale de la face extérieure de la paroi 81 et possèdent respectivement une portion d'extrémité libre 85.1, 86.1 et 87.1.

La face extérieure du capot 83 comprend également un ergot 87 parallélépipédique venant en saillie selon une direction sensiblement perpendiculaire au plan de la portion plane du capot 83.

Le montage de l'actionneur 1 sur le connecteur 80 est décrit en référence aux figures 11.1 à 11.5. L'actionneur 1 est présenté de manière à être coaxial avec le perçage 84 (figure 11.1). Dans cette position, l'arbre cannelé 72 fait face à l'alésage cannelé 92. L'actionneur 1 est alors déplacé selon l'axe X de manière à insérer la paroi 27 du boîtier 10 entre les deux portions cylindriques 81 et 82. Le mouvement de translation de l'actionneur 1 est effectué jusqu'à ce que les portions d'extrémité libre 85.1, 86.1 et 87.1 des filets hélicoïdaux 27.1, 27.2 et 27.3 du boîtier 10 de l'actionneur 1 viennent en contact avec les filets hélicoïdaux 85, 86 et 87 du connecteur 80 (figure 11.2). L'actionneur 1 est alors tourné autour de l'axe X dans le sens horaire de manière à engager les filets hélicoïdaux 27.1, 27.2 et 27.3 avec les filets homologues 85, 86 et 87.

Au cours de ce mouvement de rotation de l'actionneur 1, l'extrémité libre 28.1 de la patte élastique 28 vient au contact de l'ergot 88. Cette situation est représentée à la figure 11.3 et correspond à une rotation de l'actionneur 1 par rapport à l'ergot 88 d'environ 15 à 30° dans le sens horaire. Une rotation supplémentaire de l'actionneur 1 par rapport au connecteur 80, provoque une déformation de la patte élastique 28 contre l'ergot 88. Ce mouvement de rotation est poursuivi jusqu'à ce que les portions d'extrémité libres 85.1, 86.1 et 87.1 soient engagées respectivement dans les rainures 27.4, 27.5 et 27.6 (figure 11.4). Ceci correspond à une rotation maximale d'environ 30° de l'actionneur 1 autour de l'axe X dans le sens horaire. Dans cette position relative de l'actionneur 1 et du connecteur 80, la patte élastique 28 revient en position et l'extrémité libre 28.1 vient en appui derrière l'ergot 88, bloquant ainsi la rotation de l'actionneur 1 relativement au connecteur 80. L'actionneur 1 est alors verrouillé en position sur le connecteur 80 et l'arbre cannelé 72 de l'actionneur 1 est engagé dans l'alésage cannelé 92 du volet aéraulique. La connexion électrique de l'actionneur 1 au réseau de courant faible du véhicule est réalisée par engagement d'une broche de connexion sur le ou les conducteurs 40.1.

La dépose de l'actionneur 1, après déconnexion électrique, se fait en exerçant une pression selon une direction sensiblement radiale sur l'extrémité 28.1 de la patte élastique 28 afin de dégager celle-ci de l'ergot 88. Il suffit ensuite d'imposer un mouvement de rotation de 60° dans le sens antihoraire à l'actionneur 1 pour pouvoir le dégager. En cas de bris accidentel de la patte élastique 28 ou de l'ergot 88, il est possible, lors du remontage de l'actionneur 1, de réaliser un blocage en rotation de l'actionneur 1 par rapport au capot 83 en engageant une vis auto-taraudeuse dans le perçage 26 de l'oreille 25. Cette vis viendra se prendre dans la matière constituant le capot 83.

L'actionneur 1 peut ainsi être aisément monté et démonté sans requérir d'outillage. L'indexation du moteur 30 étant faite en référence à un point du boîtier 10 de l'actionneur 1, et la position finale de celui-ci par rapport au volet aéraulique 90 étant connue, aucune opération de calibrage complémentaire n'est requise.

On notera que le blocage en rotation du réducteur par rapport au moteur est assuré par le couvercle qui fait partie intégrante de l'enveloppe du moteur, ce qui facilite l'assemblage de ces deux éléments lors de la fabrication de l'actionneur et en réduit les coûts. L'utilisation d'un réducteur épicycloïdal améliore la compacité de l'actionneur et en réduit lui aussi les coûts de fabrication.

Bien entendu, l'invention n'est pas limitée au mode de réalisation décrit mais englobe toute variante entrant dans le champ de l'invention telle que définie par les revendications.

## Revendications

1. Actionneur de positionnement (1) d'un organe mobile, pour véhicule, comprenant un moteur électrique (30) logé dans une enveloppe de moteur (31) fermée à l'une des extrémités par un couvercle (35), le moteur comprenant un arbre moteur (34) qui traverse le couvercle, l'arbre moteur (34) étant lié en rotation à un réducteur épicycloïdal (50) ayant une couronne planétaire extérieure (52), le couvercle (35) comprenant des moyens de blocage (41) bloquant la rotation dudit couvercle par rapport à l'enveloppe du moteur (31) et bloquant la rotation de ladite couronne planétaire extérieure (52), **caractérisé en ce que** les moyens de blocage (41) comprennent au moins un élément venant en saillie du couvercle (35) selon une direction perpendiculaire à l'axe de l'arbre moteur (34) .

2. Actionneur (1) selon la revendication 1, **caractérisé en ce qu'**il comprend un boîtier (10) qui renferme le moteur électrique (30) et dans lequel les moyens de blocage (41) sont agencés pour bloquer également en rotation l'enveloppe (31) du moteur électrique (30) par rapport au boîtier (10).

3. Actionneur (1) selon l'une quelconque des revendications précédentes, dans lequel l'arbre moteur (34) s'étendant selon un axe longitudinal (X), les moyens de blocage (41) réalisent également un guidage en position du couvercle (35) par rapport à l'enveloppe (31) selon une direction longitudinale.

4. Actionneur (1) selon l'une quelconque des revendications précédentes, dans lequel le moteur électrique (30) est un moteur pas à pas.

5. Actionneur (1) selon la revendication 4, dans lequel les moyens de blocage (41) comprennent également une référence d'indexation du moteur électrique (30) permettant d'indexer la rotation du moteur électrique (30) par rapport à un point de l'enveloppe (31).

6. Actionneur (1) selon l'une quelconque des revendications précédentes, dans lequel l'enveloppe (31) comprenant une portion de cylindre droit, le couvercle (35) est un disque s'étendant dans un plan perpendiculaire à un axe (X) de l'arbre de sortie (34), le disque comprenant trois languettes (41) en saillie radiale s'étendant selon des directions perpendiculaires entre elles et coopérant avec des rainures (42) homologues de l'enveloppe (31).

7. Actionneur (1) selon l'une quelconque des revendications précédentes, dans lequel le moteur électrique (30) est pourvu d'un circuit électrique (38) relié à un conducteur (39) ayant un premier tronçon d'extrémité (39.3) et un deuxième tronçon d'extrémité distal (39.5) sensiblement rectilignes, le conducteur (39) comportant au moins deux coudes (39.1 ; 39.2) reliant les tronçons d'extrémité (39.3 ; 39.5) l'un à l'autre, et dans lequel un arbre moteur (34) du moteur électrique (30) est pourvu d'une roue dentée (36) constituant le composant d'entrée du réducteur épicycloïdal (50), l'arbre de sortie (34) s'étendant au moins partiellement au travers d'un composant de sortie (70) du réducteur épicycloïdal (50).

## Patentansprüche

1. Aktuator zur Positionierung (1) eines beweglichen Organs für ein Fahrzeug, welcher einen Elektromotor (30) umfasst, der in einer Motorhülle (31) untergebracht ist, die an einem der Enden durch einen Deckel (35) verschlossen ist, wobei der Motor eine Motorwelle (34) umfasst, welche den Deckel durchquert, wobei die Motorwelle (34) mit einem Planetengetriebe (50) drehfest verbunden ist, das ein Hohlrad (52) aufweist, wobei der Deckel (35) Blockiermittel (41) umfasst, welche die Drehung des Deckels in Bezug auf die Motorhülle (31) blockieren und die Drehung des Hohlrades (52) blockieren, **dadurch gekennzeichnet, dass** die Blockiermittel (41) wenigstens ein Element umfassen, das vom Deckel (35) aus in einer zur Achse der Motorwelle (34) senkrechten Richtung vorsteht.

2. Aktuator (1) nach Anspruch 1, **dadurch gekennzeichnet, dass** er ein Gehäuse (10) umfasst, welches den Elektromotor (30) umschließt und in welchem die Blockiermittel (41) dazu eingerichtet sind, auch die Hülle (31) des Elektromotors (30) in Bezug auf das Gehäuse (10) gegen Verdrehen zu sichern.

3. Aktuator (1) nach einem der vorhergehenden Ansprüche, wobei, wenn sich die Motorwelle (34) entlang einer Längsachse (X) erstreckt, die Blockiermittel (41) auch eine positionstreue Führung des Deckels (35) in Bezug auf die Hülle (31) entlang einer Längsrichtung bewirken.

4. Aktuator (1) nach einem der vorhergehenden Ansprüche, wobei der Elektromotor (30) ein Schrittmotor ist.

5. Aktuator (1) nach Anspruch 4, wobei die Blockiermittel (41) außerdem eine Referenz zur Indexierung des Elektromotors (30) umfassen, die es ermöglicht, den Elektromotor (30) in Bezug auf einen Punkt der Hülle (31) in der Drehung zu indexieren.

6. Aktuator (1) nach einem der vorhergehenden Ansprüche, wobei, wenn die Hülle (31) einen Abschnitt eines geraden Zylinders umfasst, der Deckel (35) eine Scheibe ist, die sich in einer zu einer Achse (X) der Ausgangswelle (34) senkrechten Ebene erstreckt, wobei die Scheibe drei radial vorstehende Zungen (41) umfasst, die sich in zueinander senkrechten Richtungen erstrecken und mit entsprechenden Nuten (42) der Hülle (31) zusammenwirken.

7. Aktuator (1) nach einem der vorhergehenden Ansprüche, wobei der Elektromotor (30) mit einer elektrischen Schaltung (38) versehen ist, die mit einem Leiter (39) verbunden ist, der einen ersten Endabschnitt (39.3) und einen distalen zweiten Endabschnitt (39.5) aufweist, die im Wesentlichen gerade sind, wobei der Leiter (39) wenigstens zwei Winkelstücke (39.1; 39.2) aufweist, welche die Endabschnitte (39.3; 39.5) miteinander verbinden, und wobei eine Motorwelle (34) des Elektromotors (30) mit einem Zahnrad (36) versehen ist, das die Eingangskomponente des Planetengetriebes (50) darstellt, wobei sich die Ausgangswelle (34) wenigstens teilweise durch eine Ausgangskomponente (70) des Planetengetriebes (50) hindurch erstreckt.

## Claims

1. Positioning actuator (1) for a movable member, for a vehicle, comprising an electric motor (30) housed in a motor casing (31) closed at one end by a cover (35), the motor comprising a drive shaft (34) that passes through the cover, the drive shaft (34) being rotationally connected to an epicyclic reduction gear (50) having an external ring gear (52), the cover (35) comprising blocking means (41) preventing the rotation of said cover with respect to the casing (31) of the motor and preventing the rotation of said external ri3ng gear (52), **characterized in that** the blocking means (41) comprise at least one element protruding from the cover (35) in a direction perpendicular to the axis of the drive shaft (34) .

2. Actuator (1) according to Claim 1, **characterized in that** it comprises a housing (10) which encloses the electric motor (30) and in which the blocking means (41) are arranged for also preventing the rotation of the casing (31) of the electric motor (30) with respect to the housing (10).

3. Actuator (1) according to either one of the preceding claims, wherein, the drive shaft (34) extending along a longitudinal axis (X), the blocking means (41) also guide the cover (35) into position with respect to the casing (31) in a longitudinal direction.

4. Actuator (1) according to any one of the preceding claims, wherein the electric motor (30) is a stepper motor.

5. Actuator (1) according to Claim 4, wherein the blocking means (41) also comprise an indexing reference for the electric motor (30), making it possible to index the rotation of the electric motor (30) with respect to a point of the casing (31).

6. Actuator (1) according to any one of the preceding claims, wherein, with the casing (31) comprising a straight cylinder portion, the cover (35) is a disc extending in a plane perpendicular to an axis (X) of the output shaft (34), the disc comprising three radially protruding tabs (41) that extend in directions perpendicular to one another and cooperate with counterpart grooves (42) in the casing (31).

7. Actuator (1) according to any one of the preceding claims, wherein the electric motor (30) is provided with an electric circuit (38) connected to a conductor (39) having a first end section (39.3) and a distal second end section (39.5) that are substantially straight, the conductor (39) having at least two elbows (39.1; 39.2) that connect the end sections (39.3; 39.5) together, and wherein a drive shaft (34) of the electric motor (30) is provided with a gear wheel (36) that forms the input component of the epicyclic reduction gear (50), the output shaft (34) extending at least partially through an output component (70) of the epicyclic reduction gear (50) .
